# Europäisches Patentamt

## European Patent Office

## Office européen des brevets

(11) Publication number: **0 124 353**
**B1**

(12) **EUROPEAN PATENT SPECIFICATION**

(45) Date of publication of patent specification: **11.11.87**

(51) Int. Cl.⁴: **G 11 B 7/08**

(21) Application number: **84302816.8**

(22) Date of filing: **26.04.84**

(54) Optical disc player.

(30) Priority: **26.04.83 JP 73389/83**

(43) Date of publication of application:
**07.11.84 Bulletin 84/45**

(45) Publication of the grant of the patent:
**11.11.87 Bulletin 87/46**

(84) Designated Contracting States:
**AT CH DE FR GB IT LI NL**

(56) References cited:
**EP-A-0 064 273**
**EP-A-0 073 066**
**EP-A-0 074 131**
**AT-B- 347 149**
**GB-A-2 107 107**

(73) Proprietor: **SONY CORPORATION**
**7-35 Kitashinagawa 6-Chome Shinagawa-ku**
**Tokyo 141 (JP)**

(72) Inventor: **Naito, Takashi c/o Sony Corporation**
**Patents Division 7-35, Kitashinagawa 6-chome**
**Shinagawa-ku Tokyo (JP)**
Inventor: **Maruta, Kenji c/o Sony Corporation**
**Patents Division 7-35, Kitashinagawa 6-chome**
**Shinagawa-ku Tokyo (JP)**
Inventor: **Ukita, Yoshitaka c/o Sony**
**Corporation**
**Patents Division 7-35, Kitashinagawa 6-chome**
**Shinagawa-ku Tokyo (JP)**

(74) Representative: **Purvis, William Michael**
**Cameron et al**
**D. Young & Co. 10 Staple Inn**
**London WC1V 7RD (GB)**

Courier Press, Leamington Spa, England.

### Description

The invention relates to an optical disc player wherein an optical disc on which information signals, such as audio and/or video signals, are recorded is irradiated with a laser beam for reading out and reproducing the information signals.

Optical disc players are becoming more and more popular, partly due to their superior reproduction capacities and partly due to their reduced size as compared to players for other types of discs.

An optical disc player generally has a disc table driven by a spindle motor. An optical disc is inserted into the disc player and affixed to the disc table for rotation therewith. An optical pick-up including a semiconductor laser can travel in a direction across a series of substantially circular concentric tracks recorded on the disc. The laser beam emitted from the semiconductor laser is directed onto a surface of the optical disc at right angles thereto so as to scan the tracks for reading out and reproducing the information signals recorded in the tracks.

In an optical disc player of the above kind, the information signals, such as audio signals, in the form of a number of pulse coded bit strings, are recorded with high density on the optical disc used as the signal recording medium. A standard disc size having a diameter of 12 cm has been adopted as the "compact disc" for prerecorded musical or audio signals. Since this "compact" optical disc has such a small size and is used as the standard recording medium for the optical disc players designed for playback of prerecorded musical or audio signals, an effort has been made similary to reduce and standarize the size of the optical disc player itself. For example, in order to minimise the height or thickness of the optical disc player, the optical pick-up may be arranged so that the laser beam is emitted from the laser in a direction parallel with the surface of the optical disc affixed to the disc table and at right angles to the optical axis of an object lens by which the laser beam is eventually focused on the surface of the optical disc. Some of the optical components, such as lenses or quarter wave plates, may be arranged along this direction parallel with the disc surface so that the required thickness or height of the optical disc player is reduced. The laser beam is then reflected 90° by a mirror and transmitted towards the object lens which converges the laser beam and directs it vertically towards the surface of the optical disc. The object lens also receives the laser beam reflected back from the disc surface. Such an optical pick-up in which the laser beam is emitted from the semi-conductor laser in a direction normal to the optical axis of the object lens has a lesser thickness than one in which for example, the laser beam is emitted from the laser in a direction aligned with the optical axis of the object lens.

As mentioned above, it is desirable to reduce the size of the base and/or outer casing of optical disc players and the arrangement of the optical pick-up may be conducive to reducing the thickness or height of the overall device. Conventional optical disc players are usually provided with a rectangular casing and the optical pick-up is mounted for movement in a direction normal to a side of the rectangular casing along a radius of the optical disc on the disc table so that the record tracks on the disc are scanned by the laser beam for reproducing the information signals recorded in the tracks. Such a player is described in EP—A1—0 074 131.

In this type of conventional disc player, the optical pick-up is provided with a biaxial driving device for the object lens for effecting servo control of the object lens along two mutually perpendicular or orthogonally related axes, that is, in the directions for focusing the laser beam at the plane of the tracks on the optical disc, and for accurately positioning the laser beam in the tracking or radial direction. This biaxial driving device and the mounting for the object lens tend to be bulky. Therefore, when the optical pick-up is transferred to a position for scanning the outermost track on the optical disc, the optical pick-up projects substantially beyond the outer periphery of the optical disc. Thus, the side of the outer casing normal to the direction of travel of the optical pick-up must be spaced substantially outward from the perimeter of the optical disc and it has not been possible to reduce the outer casing to the size of a rectangle inscribed by the circular perimeter of the optical disc, that it, to reduce the optical disc player to the smallest size possible.

According to the invention, there is provided an optical disc player to play a compact disc having information recorded on its surface in substantially circular concentric tracks,
the disc player comprising
a base having dimensions in two orthogonally related directions and at least one portion projecting beyond the periphery of the disc in a radial direction intermediate the orthogonally related directions;
an optical pick-up means in the base including an object lens for scanning the tracks; and
drive means for moving the optical pick-up means between an outer position for scanning an outermost track of the disc and an inner position for scanning an innermost track of the disc;
characterised in that
the base has dimensions in the two orthogonally related directions substantially equivalent to the diameter of the disc;
the drive means moves the optical pick-up means in a direction of motion comprising a straight path parallel with the radial direction;
the optical pick-up means is accommodated, at least in part, with said one projecting portion and includes a light source, a beam splitter, and a mirror aligned in one portion of an optical path parallel to the surface of the disc; and
said one portion of the optical path lies at an acute angle with respect to said direction of motion of said optical pick-up means, and said acute angle is substantially equal to an angle between said direction of motion and a selected one of said orthogonally related directions.

The invention is diagrammatically illustrated by way of example with reference to the accompanying drawings, in which:—

Figure 1 is a top plan view of an optical disc player according to the prior art;

Figure 2 is a schematic cross sectional view showing an optical pick-up unit employed in the disc player of Figure 1;

Figure 3 is a perspective view of an optical disc player according to a preferred embodiment of the invention;

Figure 4 is a top plan view of the optical disc player of Figure 3;

Figure 5 is a bottom plan view of the optical disc player of Figure 3;

Figure 6 is a side cross-sectional view showing a driving system for a disc table of the optical disc player of Figure 3;

Figure 7(A) is a cross-sectional view of an optical pick-up employed in the disc player of Figure 5 and which is taken on line A—A thereon;

Figure 7(B) is a cross-sectional view of the optical pick-up of Figure 5, taken on line B—B thereof;

Figure 8 is an exploded perspective view showing a biaxial driving device that may be employed within the optical pick-up of Figure 5;

Figure 9 is an axial sectional view of the driving device of Figure 8;

Figure 10 is a cross-sectional view of the driving device taken on line A—A in Figure 9;

Figure 11 is an enlarged diagrammatic plan view of a portion of an optical disc, illustrating tracking error detection in a three spot system;

Figure 12 is a schematic view showing the positioning of a diffraction grating of the optical pick-up according to the invention;

Figure 13 is a schematic perspective view showing a push-pull type object lens driving system which may be utilized in an optical pick-up according to the invention;

Figure 14 is a perspective view showing another embodiment of an optical disc player according to the invention; and

Figure 15 is a perspective view showing still another embodiment of an optical disc player according to the invention.

In this specification, the term "scanning" is used to designate linear movements of the optical pick-up for moving the focused laser beam radially across the disc surface between the inner and outer peripheries of the disc.

The term "fine tracking" is used to designate small movements of the object lens generally in the direction across the record tracks to cause the focused laser beam to follow a track on the disc during rotation of the latter.

The terms "tracking control" and "tracking servo control" are used to designate the control operation for fine tracking defined above.

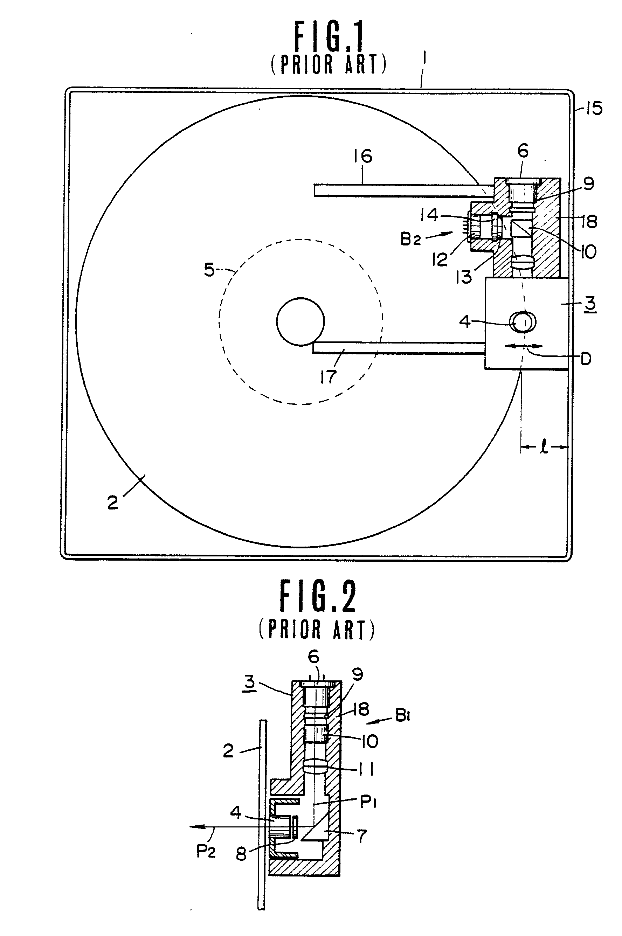

Referring now to the drawings and initially to Figures 1 and 2 thereof, an optical disc player as previously proposed is shown to have a rectangular outer casing 1 substantially inscribed, at three sides, by the outer circumference of an optical disc 2. An optical pick-up 3 is constructed as shown in Figure 2 to allow the thickness or height of the optical disc player to be reduced. More particularly, in the optical pick-up 3, a laser beam is caused to travel along an optical path having a portion $P_1$ parallel with the surface of the optical disc 2 mounted on a disc table 5 (Figure 1), and the laser beam is then reflected 90° by a mirror 7 and transmitted through an object lens 4 in an optical path portion $P_2$ which is normal to the disc 2 and parallel with the optical axis of the object lens 4 provided for focusing the laser beam at the surface of the optical disc 2 and to receive the laser beam reflected back from the surface. Thus, in the optical pick-up 3, a semiconductor laser 6 is mounted at the end of a housing 18 to emit a laser beam in the direction of path portion $P_1$ which is at right angles to the optical axis of the object lens 4. An optical block $B_1$, including a diffraction grating 9, a beam splitter 10 and a collimating lens 11, is mounted within the housing 18 with its optical axis parallel to the optical path portion $P_1$ of the laser beam and normal to the optical path portion $P_2$ through the object lens 4. In the optical block $B_1$, the collimating lens 11 forms the laser beam into a parallel beam and the laser beam is conventionally divided by the diffraction grating 9 into a main beam used for reading out the recorded signals and a pair of auxiliary beams used for performing tracking servo control, as will be described later.

Another optical block $B_2$, illustrated in Figure 1, is provided within the housing 18 and is utilized for tracking control. The optical block $B_2$ has its optical axis perpendicular to the plane containing the optical path portions $P_1$ and $P_2$. The laser beam reflected from the optical disc 2 passes back through the object lens 4, is again reflected 90°by the mirror 7 and is then reflected through 90° by the beam splitter 10 in the direction toward a photodetector 12 in the second optical block $B_2$. The block $B_2$ further includes an intermediate lens 13 and a cylindrical lens 14 and placed between the beam splitter 10 and the photodetector 12 along the reflected laser beam path. The optical pick-up 3 having the above arrangement, in which the laser beam path is right angularly bent between the semiconductor laser 6 and an object lens 4, is smaller in the direction normal to the disc 2 than one in which the laser beam is directed along a straight path from the laser through the object lens 4. In the latter case, the housing of the optical pick-up would have to be large enough to accommodate the laser 6, the diffraction grating 9, the beam splitter 10, the collimating lens 11 and the object lens 4 all in a straight line in the direction of the height of the optical disc player. In the so-called thin type optical pick-up, only the mirror 7 and the object lens 4 need be accommodated in this direction. Thus the optical disc player with the thin type optical pick-up 3 may have a reduced thickness or height.

As mentioned above, it is desirable to reduce the size of the outer casing 1 and the thin type of the optical pick-up 3 makes it possible to minimise the thickness or height of the outer casing 1. However, the conventional optical disc player shown in Figure 1 is constructed so that the optical pick-up 3 is mounted for movement in a direction indicated by the arrow D which is normal to a side wall 15 of the rectangular casing 1. The tracks on the optical disc 2 affixed to the disc table 5 are scanned along a radius of the disc by the laser beam transmitted through the object lens 4 as the optical pick-up 3 moves in the direction of the arrow D from the inner periphery towards the outer periphery of the optical disc 2 for reproducing the recorded information signal. To this end, the optical pick-up 3 is movably mounted on a pair of guide shafts 16, 17 which are fixed in perpendicular relation to the side wall 15 of the outer casing 1. Thus, the optical pick-up 3 may be moved radially with respect to the disc 2 by any suitable transfer means, such as a driving motor (not illustrated), with the optical axis of the object lens 4 always tracing a radius of the optical disc 2 placed on disc table 5.

The optical pick-up 3 may be provided with a conventional biaxial driving device for the object lens 4 for effecting servo control of the object lens 4 along two mutually pependicular axes, that is, in the directions for tracking control and focusing, respectively. Such biaxial driving device tends to be bulky. Therefore, when the optical pick-up 3 is at an outer position for reading out the outermost track on the optical disc 2, as in Figure 1, that is, when the optical axis of the object lens 4 is coincident with the outermost track, the optical pick-up 3 projects beyond the outer periphery of the optical disc 2 at least a distance / (Figure 1), as measured from the centre of the lens 4 to the outer side of the housing 18. Even if the biaxial driving device could be reduced in size so that its diameter is approximately equal to that of the object lens 4, the object lens 4 must still be at least 5 to 6 mm in diameter, in order to provide a beam spot of sufficient diameter on the surface of optical disc 2 and to provide an appropriate focal length of the object lens 4. Thus, when the optical pick-up unit 3 is at this outer position for reading out the outermost track on the optical disc 2, one side of the housing 18 carrying the object lens 4, inclusive of the object lens 4, projects beyond the circumference of the optical disc 2. Therefore, the side wall of the outer casing 1 perpendicular to the scanning direction D of the optical pick-up 3 must project at least the distance / beyond the circumference of the optical disc 2. From the foregoing, it will be seen that it is not possible with the constuction according to the prior art to reduce the outer casing 1 to the size of a square inscribed, at all sides, by the circular perimeter of the optical disc 2, that is, to reduce orthogonally related dimensions of the optical disc player to the minimum.

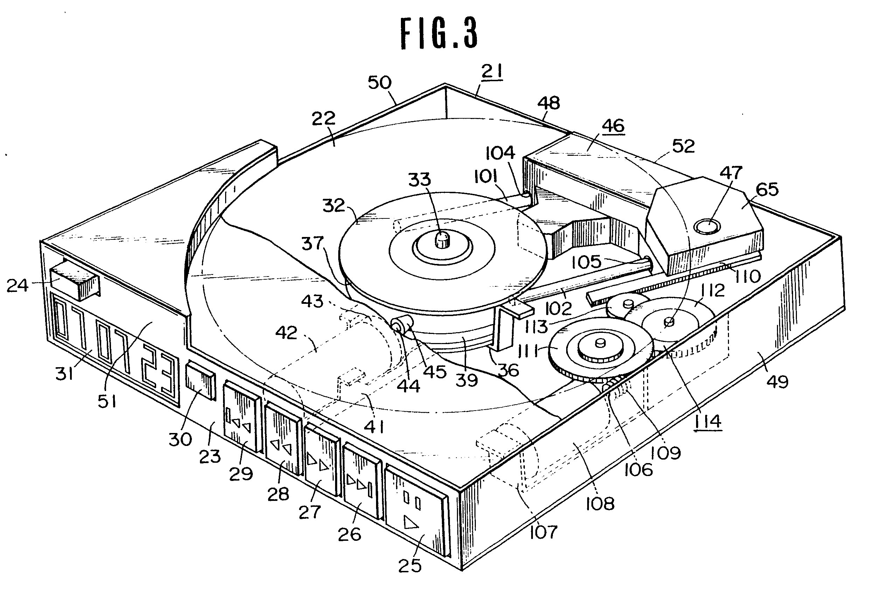

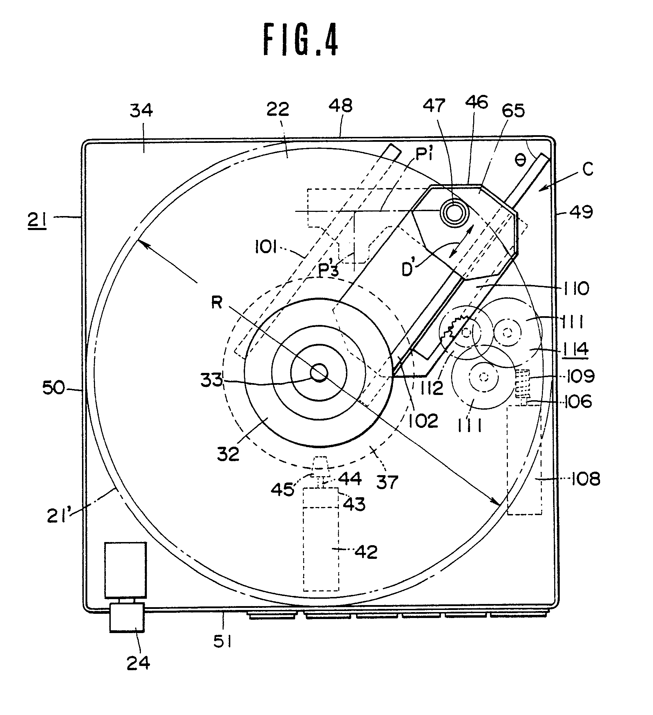

A preferred embodiment of an optical disc player according to the invention will now be described initially with reference to Figures 3 and 4. Such an optical disc player is shown to have an outer casing 21 forming the body or base of the player proper and having the shape of a square inscribed by the circular perimeter of an optical disc 22 to be played by the player. Thus, each of the four sides 48, 49, 50 and 51 of the casing 21 is approximately equal in length to the diameter R of the optical disc 22. Various operating buttons, such as a power switch button 24, a play/pause button 25, a tune select button 26, a rapid feed button 27, a designated tune select button 28, a reverse button 29 and an eject button 30, as well as a timer or tune address display 31, are provided on a front panel 23 at the side 51 of the square outer casing 21.

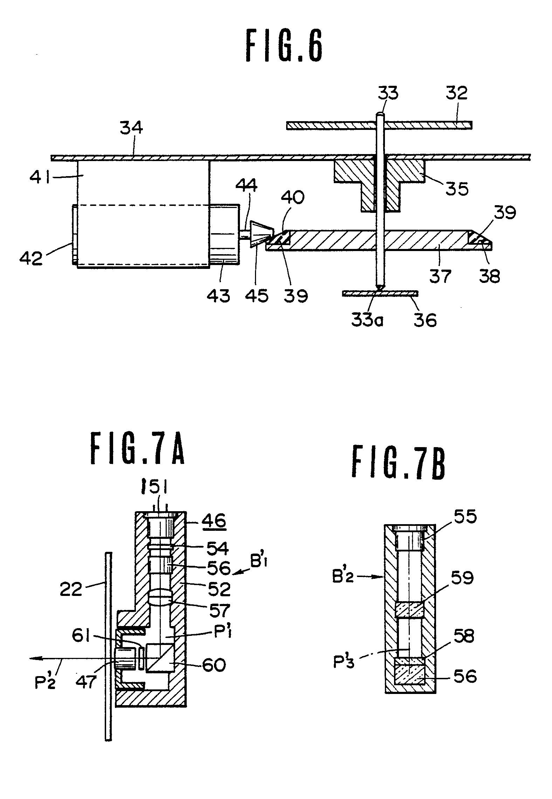

Located centrally within the outer casing 21 is a rotatable spindle 33 which is made fast to a disc table 32 to which the optical disc 22 is to be affixed with its axis approximately coincident with the centre of the outer casing 21. A chassis 34 (Figure 6) of the disc player has a bearing 35 attached at the underside thereof, and the spindle 33 passes through and is supported by the bearing 35. The spindle 33 is also supported at a tapered lowered end 33a thereof by a thrust bearing 36 suitably suspended from the underside of the chassis 34. A metallic drive wheel 37 is secured to a lower part of the spindle 33 and an annular groove 38, formed as a step, is provided at the outer peripheral surface of the wheel 37. The groove 38 receives an elastic ring 39, which may be made of rubber, and has a tapered upper surface 40. Motor supporting brackets 41 are mounted at the underside of the chassis 34 and support an electric motor 42 for driving the table 32. The drive motor 42 has its shaft (not illustrated) connected via a reduction gear unit 43 to a driving shaft 44. The driving shaft 44 in turn carries a tapered drive roll 45 which presses against the tapered surface 40.

In this manner, a table driving system is provided in which the drive roll 45, driven by the drive motor 42 and pressed against the upper surface 40 of the wheel 37, rotates the wheel 37 and therefore causes the spindle 33 and the disc table 32 to rotate. The drive motor 42 may be mounted, as shown, with its output shaft parallel to the surface of the optical disc 22 on the disc table 32. Consequently the spindle driving system may be reduced in size, contributing further to the reduction in height of the optical disc player.

In the interior of the outer casing 21, in which the disc table 32 is mounted in the above described manner, there is also mounted an optical pick-up 46 (Figures 3, 4 and 5) having an onject lens 47 in opposing relation to the surface of the disc 22. The optical pick-up 46 provides a laser beam for irradiating the surface of the optical disc 22 affixed to the disc table 32 and thereby reading out the information signals, such as musical sound signals, recorded on the optical disc 22. The optical pick-up 46 can travel in a direction D' (Figure 4) which is parallel with a radius of the optical disc 22 and which is at an acute angle with respect to each of the side walls 48-51 of the casing 21.

It should be noted in Figure 7A that the optical pick-up 46 employed in the optical disc player of the invention is similar to the previously described pick-up 3 in that the laser beam is directed along a bent path in order to reduce the thickness of the optical pick-up 46 in the direction perpendicuar to disc 22. To this end, the optical pick-up 43 has a semiconductor laser 151 (Figure 7A) mounted at one end of a housing 52 so that the laser beam emanating therefrom is directed along an optical path portion $P'_1$ normal to a path portion $P'_2$ which coincides with the optical axis of the object lens 47. An optical block $B'_1$ including a diffraction grating 54, a beam splitter 56 and a collimating lens 57, is provided within the housing 52 along the optical path $P'_1$. The diffraction grating 54 is conventionally used to divide the laser beam into a main beam for reading the recorded signals and a pair of auxiliary beams for tracking servo control purposes to be discussed in detail later. The beam splitter 56, is used to direct the laser beam reflected from the optical disc 22 towards a photodetector 55 (Figure 7B), while the collimating lens (57) is used to collimate the laser beam, all as in the pick-up 3 of the conventional optical disc player described above.

A separate optical block $B'_2$ including an intermediate lens 58 and a semicylindrical lens 59 is also provided within the housing 52 and has its optical axis or path portion $P'_3$ (Figures 4 and 7B) normal to a plane which contains both the optical path portions $P'_1$ and $P'_2$ of Figure 7A. The intermediate lens 58 directs the return laser beam to the photodetector 55 after it has been refracted by 90° or reflected through the beam splitter 56. The semicylindrical lens 59 is used for astigmatizing the laser beam, as in the prior art optical pick-up 3.

The laser beam emanating from the semiconductor laser 151 is reflected by a reflecting mirror 60 through an angle of 90° between the optical path portions $P'_1$ and $P'_2$ and then passes through a quarter wave plate 61, which rotates the beam axis by 45°, before reaching the object lens 47.

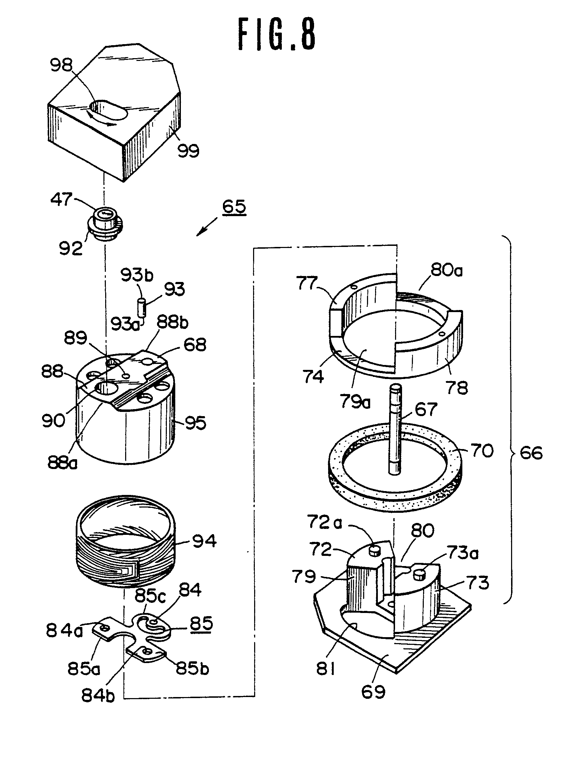

The object lens 47, which converges the laser beam from the semiconductor laser 151 for irradiation of the surface of the optical disc 22 and which receives the reflected laser beam back from the disc surface, is mounted in a biaxial driving device 65 incorporated in the housing 52. The biaxial driving device 65 operates to drive the lens 47 in two mutually perpendicular directions, that is, in the focusing direction and the tracking direction, for simultaneously performing a focusing control operation and a tracking control operation for causing the laser beam accurately to trace the tracks. As shown in Figure 8, the biaxial driving device 65 comprises a stationary section 66, which forms a magnetic circuit providing a magnetic gap and includes a supporting shaft 67, and a movable section 68 mounted on the shaft 67 of the stationary section 66 for rotation about and sliding along the shaft 67. The stationary section 66 includes, in addition to the shaft 67, a mounting base plate 69 for securing the stationary section 66 to the housing 52, a ring magnet 70, two diametrically opposed sector-shaped inner yokes 72, 73 integrally mounted on the base plate 69, and two diametrically opposed sector-shaped outer yokes 77, 78 integrally mounted on a ring-like yoke mounting rim 74 so as to face the inner yokes 72, 73, respectively. The supporting shaft 67 is mounted vertically at the centre of the base plate 69, and two cut-outs 79, 80 are defined between and at opposite sides of the inner yokes 72, 73 which have lugs 72a, 73a on their respective upper end faces. The base plate 69, has a window 81 coincident with the cut-out 79 for passing the laser beam to and from the object lens 47 along the optical path portion $P'_2$ in the housing 52. The ring magnet 70 is mounted on the base plate 69 around the base portions of the inner yokes 72, 73, and the yoke mounting rim 74 formed with the outer yokes 77, 78 rests securely on the ring magnet 70. The outer yokes 77, 78 extend over arcuate lengths equal to one-fourth the circumferential length of the rim 74 and as earlier mentioned, are diametrically opposite to each other. Thus two cut-outs 79a, 80a are formed between the opposed sides of the outer yokes 77, 78.

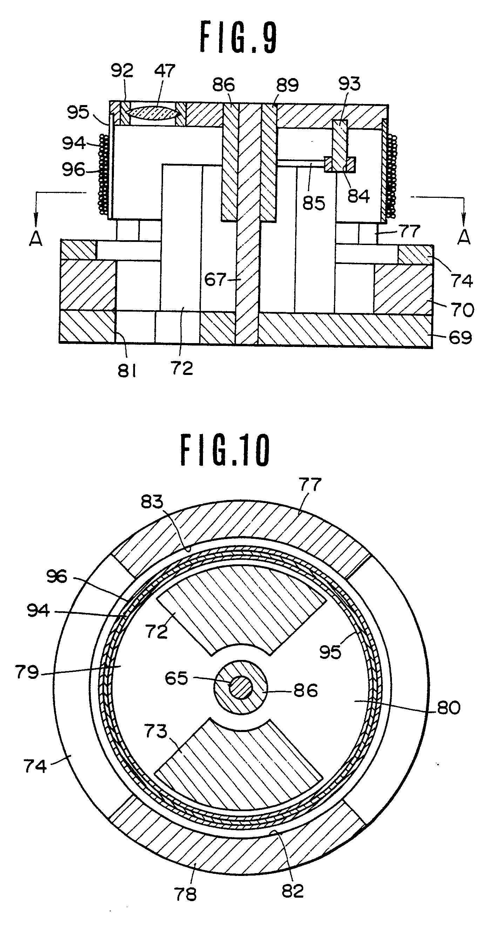

The outer yokes 77, 78 are located in opposition or facing relation to the inner yokes 72, 73, as shown in Figure 10, to form magnetic gaps 82, 83 therebetween and define a magnetic circuit. A damper 85 (Figure 8) of resilient material is provided with a central flexible portion 85c having a centre aperture 84 and lateral legs 85a, 85b provided with apertures 84a, 84a respectively. The damper 85 is mounted, at its legs 85a, 85b, on the yokes 72, 73 with the lugs 72a, 73a being matingly received in the apertures 84a, 84b. The portion 85c of the damper 85 faces the centre of the cut-out 80 defined between the inner yokes 72, 73, at the side opposite to the cut-out 79 associated with the window 81.

A sleeve bearing 86 (Figures 9 and 10) of the movable section 68 is slidably mounted on the supporting shaft 67. The movable section 68 is in the form of a disc slightly larger than the outer periphery of the inner yokes 72, 73, with an integral diametrical raised portion 88 having a central vertical hole 89 into which is inserted and secured the upper end part of the bearing 86. One end 88a of the raised portion 88 of the movable section 68 has a vertical lens hole 90 into which is inserted and secured a lens frame 92 supporting the object lens 47. Thus, the window 81 is registered with the object lens 47 so that the laser beam in the optical path portion $P'_2$ (Figure 7A) can pass through the light window 81 and the cut-out 79 defined between the inner yokes 72, 73.

Mounted at the other end 88b of the raised portion 88 of the movable section 68 is a supporting pin 93 having an upper end 93b secured to the underside of the movable section 68 and a lower

end 93*a* secured in the aperture 84 of the damper 85 so that the latter damps movements of the movable section 68 relative to stationary section 66.

The movable section 68, constructed in the above described manner, is further provided with a tracking drive coil 94 on a tubular bobbin 95. The tracking drive coil 94 has a skew winding pattern effective to drive the movable section 68 angularly about the axis of the shaft 67. Due to the radial spacing of the object lens 47 from the axis of the shaft 67, angular movement of the section 68 about the shaft 67 causes movement of the object lens 47 radially with respect to the disc 22. This radial motion provides tracking control of the object lens 47 in the direction transverse or across the tracks on the optical disc 22. On the tracking drive coil 94 is further mounted a focus control coil 96 having a normal winding pattern and effective to cause the movable section 68 to move axially on the shaft 67, that is in the vertical direction of Figure 8 for adjusting the object lens 47 in its focal direction relative to the disc 22. The biaxial driving device 65 is covered by a cap 99 having an elongate thorugh-hole 98 opposing the object lens 47 so as to avoid interference with the laser beam.

For achieving focusing control by means of the adjustment of the object lens 47 by the biaxial driving device 65, the laser beam reflected back from the surface of the optical disc 22 is astigmatized by the cylindrical lens 59 and passes to the photodetector 55. The photodetector 55 may conventionally be divided into four detector elements. Focusing servo currents corresponding to differential outputs from respective sensors associated with the four detector elements are conventionally derived and supplied to the focus control coil 96 (Figure 10) for driving the movable section 68 to which the object lens 47 is attached, as described above.

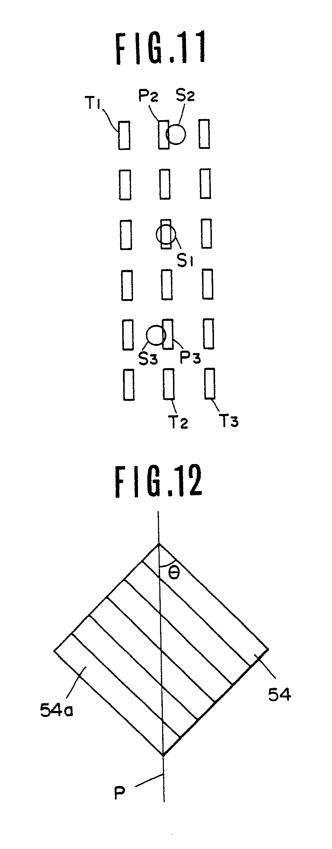

Tracking control of the object lens 47 is conventionally performed as follows. As earlier mentioned, the laser beam emanating from the semiconductor laser 151 is divided by the diffraction grating 54 into a main beam for reading the signals recorded in the tracks and two auxiliary beams. As shown in Figure 11, the main beam forms a main beam spot $S_1$ on the surface of the optical disc 22, as shown in Figure 11, and the two auxiliary beams form auxiliary beam spots $S_2$, $S_3$ which are spaced oppositely from the main beam spot $S_1$ in a direction substantially tangential to a record track T being scanned by the main beam spot $S_1$. Further, with the main beam spot $S_1$ accurately positoned or centred on a track, for example, the track $T_2$ on Figure 11, the auxiliary beam spots $S_2$ and $S_3$ have small, opposed deviations with respect to the track $T_2$. The amounts of the auxilary beams reflected from pits $P_2$, $P_3$ of the track $T_2$ on which the auxiliary beam spots $S_2$, $S_3$ are incident are detected by the photodetector 55, and tracking servo currents are derived corresponding to differential outputs obtained from the reflected auxiliary beams.

These tracking servo currents are supplied to the tracking driving coil 94 for angularly driving the movable section 68, and the object lens 47 attached thereto, about the shaft 67 until the main beam spot $S_1$ is positioned accurately on the track $T_2$. In this manner, the tracking servo control enables the optical pick-up 46 to trace accurately.

The optical pick-up 46, with the biaxial drive 65 supporting the biaxially movable object lens 47, may be quite bulky, as described above in connection with the prior art optical disc player. However, in this embodiment of the optical disc player of the invention, wherein the optical pick-up 46 travels at an acute angle with respect to the side walls 48—51 of the square outer casing 21, when the optical pick-up unit 46 is moved to an outer position for scanning the outermost track of the optical disc 22, as shown on Figure 4, it is positioned within the corner C defined by the side walls 48 and 49. As a result, while the optical pick-up 46 still projects beyond the outer circumference of the optical disc 22, it fits within the corner C so that neither the side wall 48 nor the side wall 49 needs to extend beyond the perimeter of the optical disc 22. Therefore, if the casing 21 of the optical disc player embodying the invention is rectangular, each of its four side walls may have a length substantially equal to the diameter of the optical disc 22. In that case, the outer casing 21 has its four side walls 48—51 forming the smallest possible square, that is, inscribing the circular perimeter of the record disc 22.

It is within the scope of the invention to reduce the size of the outer casing 21 still further, for example by retaining the corner C and conforming the remainder of the perimeter of the outer casing 21 to a curve lying substantially along the outer circumference of the optical disc 22, for example, as indicated in dot-dash lines at 21′ on Figure 4. In addition, the shape of the corner C may be varied from the sharply angled configuration shown, provided that it allows sufficient clearance for the optical pick-up 46. These and similar variations will be readily apparent to those skilled in the art.

In the preferred embodiments of the invention, wherein the casing 21 is square, the optical pick-up 46 is mounted for movement in the tracking direction D′ (Figure 4) with the optical path portion P′$_1$ (Figure 4 and 7A) extending between the beam splitter 56 and the mirror 60 maintained substantially parallel to the rear side wall 48. In other words, the optical pick-up 46 is arranged in the outer casing 21 so that the laser beam is emitted from the semi-conductor laser 151 in a direction parallel to the surface of the optical disc 22 and also parallel to the surface of the rear side wall 48.

It should be noted that tracking motion of the laser beam across the tracks of the optical disc 22 is performed in a direction normal to each track at the location where the latter is impinged upon by the main beam spot $S_1$. To this end, the optical pick-up 46 is mounted within the outer casing 21 such that the object lens 47 is moved along a radius of the optical disc 22, that is, in the direction normal to the tracks. More particularly, the optical pick-up 46 is shown mounted on two parallel guide rods 101, 102 by slide bearings 104, 105 disposed within the housing 52. The guide rods 101, 102 are mounted on the chassis base plate 34 in parallel with the radial direction in which the object lens 47 is to be moved for scanning, that is, in the tracking direction. In the present embodiment, the guide rods 101, 102 are mounted on the chassis base plate 34 at an angle $\theta$ (Figure 4) approximately equal to 45° with respect to the rear side wall 48. It will be appreciated that the radial direction of movement of the pick-up 46 is intermediate the orthogonally related directions which are perpendicular to the side walls 48 and 49 and in which the dimensions of the casing 21 are substantially equivalent to the diameter R of the disc 22. The pick-up 46 is disposed, in its outer position illustrated in Figure 3, within the corner $C$ of the square casing 21, and the laser beam emitting from the semiconductor laser 151 is directed along the optical path portion $P'_1$ toward the object lens 47 in a direction parallel to the rear side wall 48. Additionally, the optical pick-up 46 is guided so that, in its movements along the rods 101, 102 the object lens 47 is moved radially across the optical disc 22.

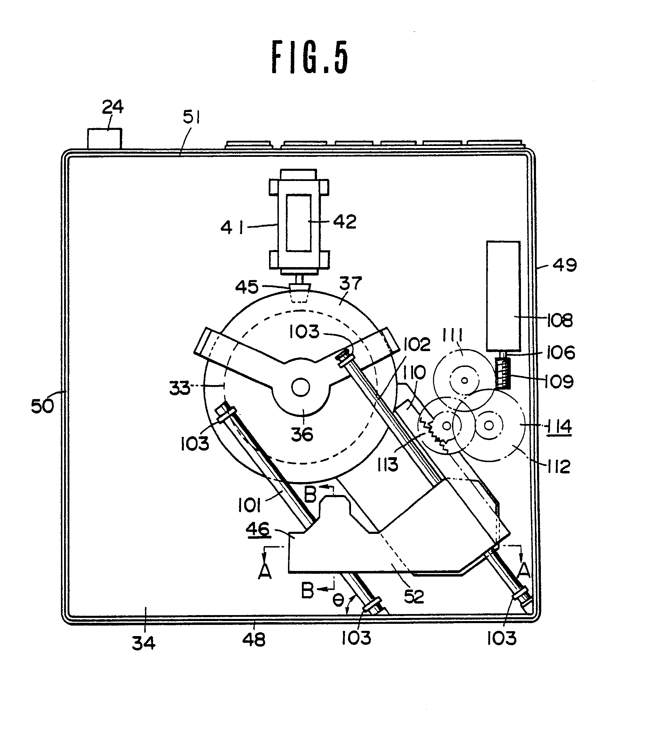

The guide rods 101, 102 are inserted at thin ends, in suitable apertures in mounting tabs 103 struck downwardly from the chassis base plate 34 (Figure 5). The guide rod 101 is fixedly positioned for accurately setting the direction of movement of the optical pick-up 46, while the guide rod 102 may be adjustably mounted for allowing compensation for any mounting error relative to the guide rod 101 and the machining tolerance of the bearing of the optical pick-up 46.

The optical pick-up 46 may be driven to scan the optical disc 22 by a pick-up driving an electric motor 108 mounted by a motor supporting bracket 107 at the underside of the chassis base plate 34 adjacent the side wall 49 with an output shaft 106 of the motor parallel to the side walls 49, 50 of the casing 21. The motor 108 and the optical pick-up 46 are interconnected by a reduction gearing 114 shown in Figures 3—5 to include meshing first, second and third gears 111, 112 and 113 for transmitting motion from a worm gear 109 on the output shaft 106 to a rack 110 secured to the housing 52 in parallel with the guide rods 101, 102.

As has been noted, tracking servo or control movements of the object lens 47 should be effected in the scanning direction which is perpendicular to the track being scanned, that is, in the radial direction of the disc 22, in order that the tracks may be accurately scanned by the main beam.

In the embodiment of the invention under discussion, tracking control movement of the object lens 47 is generally effected in a direction at an angle of approximately 45° with respect to the optical path portion $P'_1$ of the optical block $B'_1$ including the diffraction grating 54, the beam splitter 56 and the collimating lens 57. Since the optical path portion $P'_1$ of the optical block $B'_1$ is parallel to the rear side wall 48, and the angle of 45°between that optical path portion and the direction of tracking control movement is the same as the angle $\theta$ between the guide rods 101, 102 and the rear side wall 48, the tracking control movement occurs in the scanning direction, as required.

In addition, when an optical pick-up 46 utilizes the three-spot tracking control system, discussed above, with reference to Figure 11, tracking control movements of the object lens 47 are performed in accordance with differential outputs generated from the auxiliary beam spots $S_2$, $S_3$ spaced in the tangential direction of the track $T_2$ from the main beam spot $S_1$. It is therefore required that the three beams spots $S_1$, $S_2$, $S_3$ be spaced apart in a direction perpendicular to the direction of the tracking control movement of the object lens 47.

Thus, in the optical pick-up 46, in which the direction of tracking control movement of the object lens 47 is at the angle $\theta$ with respect to the optical path portion $P'_1$ of the optical block $B'_1$, the diffraction grating 54, which divides the laser beam into the three beams, has a grating pattern 54a (Figure 12) inclined by the sample angle $\theta$ in respect to a plane P which contains the optical path portions $P'_1$ and $P'_2$ in the optical pick-up 46. The cylindrical lens 59 for astigmatizing the main and auxiliary laser beams reflected back from the surface of the optical disc 22 and the photodetector 55 receiving the beams from the cylindrical lens 59 for detecting the output signals are similarly inclined about the optical path portion $P'_3$ by the same angle $\theta$ with respect to a plane which contains the optical path portions $P'_1$ and $P'_3$.

In addition, since it is the direction of the light emitting area of the semiconductor laser 151 that governs the direction in which the generated laser beam is diffused, the semiconductor laser 151 is mounted within the housing 52 so that the direction of the light emitting area thereof is inclined similarly to the pattern of the diffraction grating 54.

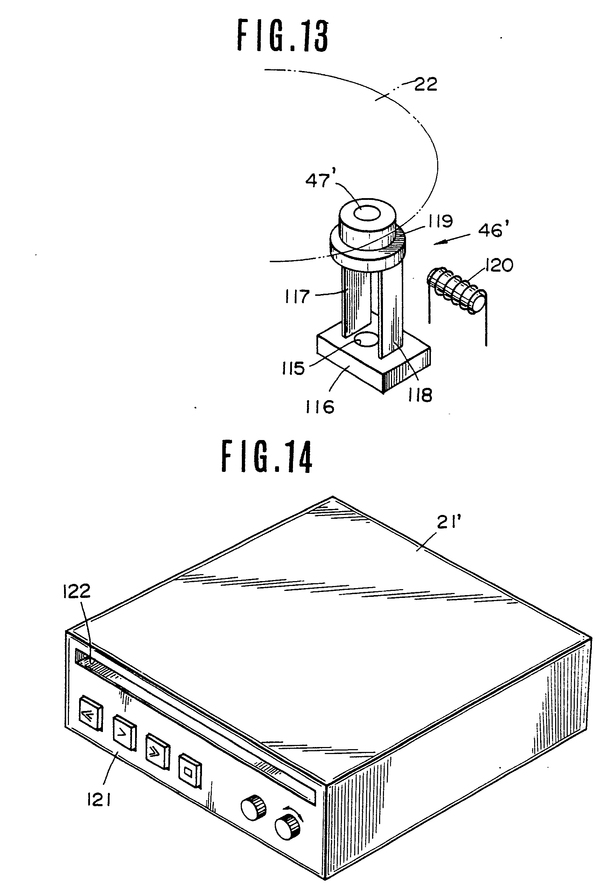

In the above described optical pick-up 46, the laser beam is divided into three beams by the diffraction grating 54 and the tracking control of the object lens 47 is performed in accordance with differential outputs derived from the two auxiliary beam spots $S_2$, $S_3$. However, an optical disc player according to the invention may have an optical pick-up 46' (Figure 13) of the known push-pull type, in which case the laser beam reflected back from the track on the disc 22 is detected by a photodector divided into two photodetector elements and the differential outputs derived from these two elements are utilized for the tracking control of the object lens 47'. The object lens 47' must still be mounted so that the tracking control is performed in the direction normal to or across the record tracks. Only a portion of a push-pull type pick-up is shown schematically in Figure

13, wherein a base plate 116 having a through-hole 115 for passage of the laser beam is provided with a pair of parallel spring plates 117, 118 mounted upright on the base plate 116 in planes parallel to tangents to the tracks. The object lens 47′ is mounted on a magnet 119 secured to the upper ends of the spring plates 117, 118. To one side of the magnet 119 is mounted a driving coil 120 fed by a driving current corresponding to the differential outputs from the photodetector and producing a corresponding magnetic field. The magnet 119 is displaced transversely as a function of the strength of the magnetic field, displacing the spring plates 117, 118, and effecting tracking control of the object lens 47 in the direction normal to, or transverse of the tracks. In the case of the optical pick-up partially shown on Figure 13, in order that outputs from the photodetector (not shown) may be accurately generated, both the direction in which the photodetector is divided into photodetector elements and the direction in which a cylindrical lens similar to the lens 59 is mounted are inclined similarly to the corresponding elements in the earlier described pick-up 46.

In the above described embodiments of an optical disc player in which the optical pick-up 46 or 46′ is moved radially in a direction at an acute angle with respect to the rear side wall 48 of the square outer casing 21, accurate tracking control may be achieved at any radial position from the inner periphery to the outer periphery of the optical disc 22 by performing tracking control movement of the object lens 47 in a direction at the same angle θ relative to the optical path portion P′$_1$ between the beam splitter 56 and the reflective mirror 61. Thus tracking control movements are also effected along a radial line towards and away from the centre of the optical disc 22.

In the above described embodiments, the optical pick-up 46 or 46′ has been described as being moved in a direction D′ at an angle θ of approximately 45° with respect to the rear side wall 48 of the outer casing 21. However, the angle θ may be varied suitably, provided that the portion of the biaxial driving device 65 projecting beyond the outer periphery of the optical disc 22 when the optical axis of the lens 47 reaches the outermost recording track on the disc 22 is disposed within the corner C projecting beyond the disc and defined by the side walls 48 and 49. Preferably, the angle θ should be as small as practicable in order to conserve space for mounting electrical circuits or mechanical parts within the outer casing 21.

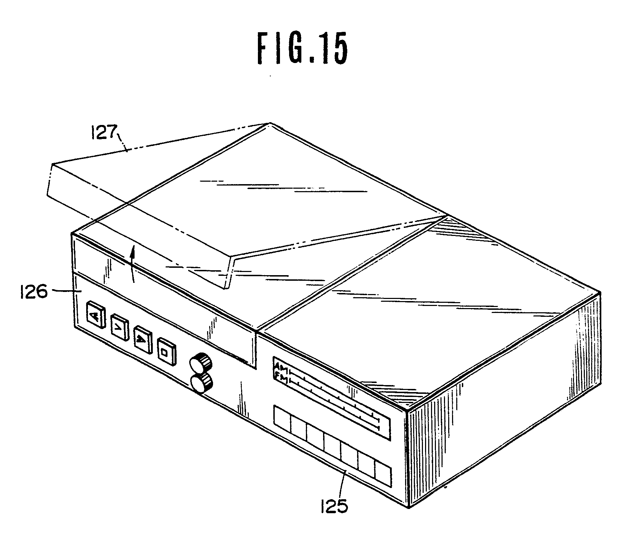

In a variation of the embodiment of the optical disc player described above, and which is illustrated in Figure 15, a cover lid 127 is pivotably mounted on an outer casing 126 for covering the upper side of the disc table after an optical record disc has been placed thereon. When the lid 127 is closed, a disc on the rotary table may be clamped in position inside the disc player between the driven disc table 32 and a chuck (not illustrated) provided on the underside of the lid.

However, the invention is not limited in its application to such an arrangement. Thus, in another embodiment shown in Figure 14, the optical disc player may be provided with an outer casing 21′ which is permanently closed at the top, and wherein an optical disc 22 is inserted into the casing 21′ through a disc insertion opening or slot 122 in a front exterior wall 121 and loaded onto the disc table by a loading means (not shown) provided within the casing 21′. This last embodiment allows further reduction in the size of the optical disc player and is particularly suited for mounting in a dashboard or the like, as in an automotive stereo system. Of course, the embodiments shown broadly on Figures 14 and 15 are otherwise similar to the embodiment described in detail with reference to Figures 3—12.

An optical disc player according to the invention may be part of a stereophonic audio system which further includes an amplifier or a tuner 125 (Figure 15). In this case, the overall system may be reduced in size because the casing 126 of the optical disc player is reduced in size.

**Claims**

1. An optical disc player to play a compact disc (22) having information recorded on its surface in substantially circular concentric tracks, the disc player comprising a base (34) having dimensions in two orthogonally related directions and at least one portion (C) projecting beyond the periphery of the disc in a radial direction intermediate the orthogonally related directions; an optical pick-up means (46) in the base (34) including an object lens (47) for scanning the tracks; and drive means (108) for moving the optical pick-up means (46) between an outer position for scanning an outermost track of the disc and an inner position for scanning an innermost track of the disc (22); characterised in that the base (34) has dimensions in the two orthogonally related directions substantially equivalent to the diameter of the disc (22); the drive means (108; moves the optical pick-up means (46) in a direction of motion comprising a straight path (D′) parallel with the radial direction; the optical pick-up means (46) is accommodated, at least in part, with said one projecting portion (C) and includes a light source (151), a beam splitter (56), and a mirror (60) aligned in one portion (P′$_1$) of an optical path parallel to the surface of the disc (22); and said one portion (P′$_1$) of the optical path lies at an acute angle (θ) with respect to said direction of motion of said optical pick-up means (46), and said acute angle is substantially equal to an angle between said direction of motion and a selected one of said orthogonally related directions.

2. An optical disc player according to claim 1, characterised in that the base has peripheral wall portions (48, 49, 50, 51) coinciding with planes defining a polygon in which a perimeter of the disc (22) may be inscribed.

3. An optical disc player according to claim 1 or claim 2, characterised in that the object lens (47) has an optical axis perpendicular to said portion (P'₁) of the optical path; and the mirror (60) is angularly positioned to reflect a beam of light emitted by the light source (151) out of said portion (P'₁) of the optical path and into parallel relation to said optical axis.

4. An optical disc player according to claims 1 to 3, characterised by position control means including tracking control means for moving the optical pick-up means (46) with respect to the disc.

5. An optical disc player according to claim 4, characterised in that the tracking control means includes diffraction means (54) for dividing the beam of light into a main beam and first and second auxiliary beams which form main ($S_1$) and first and second auxiliary beam spots ($S_2$, $S_3$), respectively, which are spaced on the disc substantially along a tangential direction of said tracks with said first and second auxiliary beam spots ($S_2$, $S_3$) being offset from the tangential direction by equal and opposite deviations; means are provided for detecting said opposite deviations of said first and second auxiliary beam spots ($S_2$, $S_3$); and means are provided for moving the object lens (47) in response to the detected deviations to position the main beam spot ($S_1$) at a selected one of the tracks.

6. An optical disc player according to claim 5, characterised in that the diffraction means is a diffraction grating (54) having grating lines inclined by said acute angle ($\theta$) with respect to a plane containing said one portion (P'₁) of the optical path and the optical axis of the object lens (47).

7. An optical disc player according to claim 6, characterised in that the means for detecting includes photodetecting means (55) also oriented at said acute angle ($\theta$).

8. An optical disc player according to claim 4, characterised in that the position control means includes focus control means (96) for moving the optical pick-up means (46) perpendicularly to the surface of the disc (22).

9. An optical disc player according to claim 1, characterised in that the direction of motion of the optical pick-up means (46) forms an angle of 45° with a selected one of the orthogonally related directions.

**Patentansprüche**

1. Plattenspieler für optische Platten zum Abspielen einer CD-Platte (Compact Disc) (22), auf deren Oberseite in im wesentlichen konzentrisch angeordneten Kreis-Spuren Information aufgezeichnet ist, mit
— einem Grundteil (34) mit Erstreckungen in zwei zueinander senkrechten Richtungen und mit zumindest einem Abschnitt (C), der über den Umfang der Platte in radialer Richtung zwischen den beiden zueinander senkrechten Richtungen hinaussteht,
— einem optischen Abtaster (46) in dem Grundteil (34) einschließlich einer Objektivlinse (47) zum Abtasten der Spuren, und
— einer Antriebseinrichtung (108) zum Bewegen des optischen Abtasters (46) zwischen einer äußeren Position zum Abtasten der am weitesten außen liegenden Spur der Platte (22) und einer inneren Position zum Abtasten der am weitesten innen liegenden Spur der Platte (22), dadurch gekennzeichnet, daß
— der Grundteil (34) Erstreckungen in den zueinander senkrechten Richtungen hat, die im wesentlichen gleich dem Durchmesser der Platte (22) sind,
— die Antriebseinrichtung (108) den optischen Abtaster (46) in einer Bewegungsrichtung bewegt, die einen geradlinigen Pfad (D') aufweist, der parallel zu der radialen Richtung verläuft,
— der optische Abtaster (46) zumindest zum Teil innerhalb des vorstehenden Abschnitts (C) untergebracht ist und eine Lichtquelle (151), einen Strahlteiler (56) und einen Spiegel (60) aufweist, die in einem Abschnitt (P₁') eines optischen Pfades, der parallel zu der Oberfläche der Platte (22) verlaüuft, ausgerichtet sind, und
— dieser eine Abschnitt (P₁') des optischen Pfades unter einem spitzen Winkel ($\theta$) in bezug auf die Bewegungsrichtung des optischen Abtasters (46) liegt und dieser spitze Winkel im wesentlichen gleich einem Winkel zwischen der Bewegungsrichtung und einer ausgewählten der zueinander senkrechten Richtungen ist.

2. Plattenspieler für optische Platten nach Anspruch 1, dadurch gekennzeichnet, daß der Grundteil Umfangswandabschnitte (48, 49, 50, 51) hat, die mit Ebenen zusammenfallen, welche ein Polygon definieren, in das ein Umkreis der Platte (22) eingeschrieben sein kann.

3. Plattenspieler für optische Platten nach Anspruch 1 oder 2, dadurch gekennzeichnet, daß die Objectivlinse (47) eine optische Achse hat, die senkrecht zu dem Abschnitt (P₁') des optischen Pfades verläuft, und der Spiegel (60) unter einem Winkel angeordnet ist, um einen von der Lichtquelle (151) emittierten Lichtstrahl aus dem Abschnitt (P₁') des optischen Pfades und in eine parallele Beziehung zu der optischen Achse umzulenken.

4. Plattenspieler für optische Platten nach einem der Ansprüche 1 bis 3, gekennzeichnet durch eine Positionssteuereinrichtung, die eine Spurverfolgungssteuerung zum Bewegen des optischen Abtasters (46) in bezug zur Platte enthält.

5. Plattenspieler für optische Platten nach Anspruch 4, dadurch gekennzeichnet, daß
— die Spurverfolgungssteuerung ein Diffraktionsmittel (54) zum Aufteilen des lichtstrahls in einen Hauptstrahl und erste und zweite Hilfsstrahlen enthält, die Haupt- ($S_1$) und erste bzw. zweite Hilfsstrahlpunkte ($S_2$, $S_3$) bilden, die auf der Platte im wesentlichen längs einer tangentialen Richtung der Spuren beabstandet sind, wobei erster und zweiter Hilfsstrahlpunkt ($S_2$, $S_3$) von der tangentialen Richtung um gleiche und zueinander entgegengesetzte Abweichungen versetzt sind,

— eine Einrichtung zum Erfassen der zueinander entgegengesetzten Abweichungen von ersten und zweitem Hilfsstrahlpunkt (S₂, S₃) vorgesehen ist und

— eine Einrichtung zum Bewegen der Objektivlinse (47) abhängig von den erfaßten Abweichungen vorgesehen ist, um den Hauptstrahlpunkt (S₁) bei einer ausgewählten der Spuren zu positionieren.

6. Plattenspieler für optische Platten nach Anspruch 5, dadurch gekennzeichnet, daß das Diffraktionsmittel ein Diffraktionsgitter (54) ist, das Gitterlinien aufweist, die um den spitzen Winkel (θ) in bezug auf eine Ebene geneigt sind, die den Abschnitt (P₁') des optischen Pfades und die optische Achse der Objektivlinse (47) enthält.

7. Plattenspieler für optische Platten nach Anspruch 6, dadurch gekennzeichnet, daß die Erfassungseinrichtung einen Fotodetektor (55) enthält, der ebenfalls unter dem Spitzen Winkel (θ) orientiert ist.

8. Plattenspieler für optische Platten nach Anspruch 4, dadurch gekennzeichnet, daß die Positionssteuereinrichtung eine Fokussteuerung (96) zum Bewegen des optischen Abtasters (46) senkrecht zu der Oberfläche der Platte (22) enthält.

9. Plattenspieler für optische Platten nach Anspurch 1, dadurch gekennzeichnet, daß die Bewegungsrichtung des optischen Abtasters einen Winkel von 45° mit einer ausgewählten der zueinander senkrechten Richtungen bildet.

## Revendications

1. Lecteur de disque optique destiné à lire un disque compact (22) à la surface duquel des informations sont enregistrées suivant des sillons concentriques circulaires,

le lecteur de disque comprenant:

une base (34) ayant des dimensions dans deux directions orthogonales, et au moins une partie (C) qui dépasse de la périphérie du disque en direction radiale, entre les directions orthogonales,

un dispositif (46) à capteur optique placé dans la base (34) et comprenant un objectif antérieur (47) destiné à balayer les sillons, et

un dispositif (108) d'entraînement destiné à déplacer le dispositif (46) à capteur optique entre une position externe de balayage d'un sillon placé le plus à l'extérieur sur le disque (22) et une position interne de balayage d'un sillon placé le plus à l'intérieur sur le disque (22), caractérisé en ce que:

la base (34) a, dans les deux directions orthogonales, des dimensions équivalant sensiblement au diamètre du disque (22),

le dispositif (108) d'entraînement déplace le dispositif (46) à capteur optique en direction contenant un trajet rectiligne (D') parallèle à la direction radiale,

le dispositif (46) à capteur optique est logé au moins en partie dans la partie en saillie (C) et comprend une source lumineuse (151), un répartiteur (56) de faisceau, et un miroir (60) alignés suivant une partie (P'₁) d'un trajet optique parallèle à la surface du disque (22), et

ladite partie (P'₁) du trajet optique fait un angle aigu (θ) avec la direction de déplacement du dispositif (46) à capteur optique, et l'angle aigu est pratiquement égal à l'angle formé par la direction de déplacement et par une direction choisie parmi lesdites directions orthogonales.

2. Lecteur de disque optique selon la revendication 1, caractérisé en ce que la base a des parties de paroi périphérique (48, 49, 50, 51) qui coïncident avec des plans délimitant un polygone dans lequel peut s'inscrire le périmètre du disque (22).

3. Lecteur de disque optique selon l'une des revendications 1 et 2, caractérisé en ce que l'objectif antérieur (47) a un axe optique perpendiculaire à ladite partie (P'₁) des trajet optique, et le miroir (60) est disposé suivant un angle afin qu'il réfléchisse un faisceau lumineux émis par la source lumineuse (151) hors de ladite partie P'₁ du trajet optique et parallèlement audit axe optique.

4. Lecteur de disque optique selon l'une quelconque des revendications 1 à 3, caractérisé par un dispositif de réglage de position comprenant un dispositif de commande de poursuite destiné à déplacer le dispositif (46) à capteur optique par rapport au disque.

5. Lecteur de disque optique selon la revendication 4, caractérisé en ce que le dispositif de commande de poursuite comporte un dispositif (54) de diffraction destiné à diviser le faisceau lumineux en un faisceau principal et en un premier et un second faisceau auxiliaire, formant une tache (S₁) de faisceau principal et une première et une seconde tache (S₂, S₃) de faisceaux auxiliaires respectivement, ces taches étant espacées sur le disque pratiquement en direction tangentielle aux sillons, la première et la seconde tache (S₂, S₃) de faisceaux auxiliaires étant décalées par rapport à la direction tangentielle de quantités égales et opposées,

un dispositif est destiné à détecter les écarts opposés de la première et de la seconde tache (S₂, S₃) des faisceaux auxiliaires, et

un dispositif est destiné à déplacer l'objectif antérieur (47) en fonction des écarts détectés afin qu'il positionne la tache (S₁) du faisceau principal sur un sillon choisi.

6. Lecteur de disque optique selon la revendication 5, caractérisé en ce que le dispositif de diffraction est un réseau (54) de diffraction ayant des traits inclinés suivant un angle aigu (θ) par rapport à un plan contenant ladite partie (P'₁) de trajet optique et l'axe optique de l'objectif antérieur (47).

7. Lecteur de disque optique selon la revendication 6, caractérisé en ce que le dispositif de détection comporte un dispositif (55) de photodétection lui aussi orienté avec l'angle aigu (θ).

8. Lecteur de disque optique selon la revendication 4, caractérisé en ce que le dispositif de réglage de position comporte un dispositif (96) de commande de focalisation destiné à déplacer le dispositif (46) à capteur optique perpendiculairement à la surface du disque (22).

9. Lecteur de disque optique selon la revendication 1, caractérisé en ce que la direction de déplacement du dispositif (46) à capteur optique fait un angle de 45° avec une direction choisie parmi lesdites directions orthogonales.

# FIG.1
## (PRIOR ART)

# FIG.2
## (PRIOR ART)

1

FIG.3

# FIG.4

0 124 353

# FIG.5

4

# FIG.6

# FIG.7A

# FIG.7B

# FIG.8

6

# FIG.9

# FIG.10

# FIG.11

T1  P2  S2

S1

S3  P3

T2  T3

# FIG.12

θ

54a

54

P

# FIG.13

# FIG.14

# FIG.15